# EUROPÄISCHE PATENTSCHRIFT

(11) **EP 2 387 521 B1**
(45) Veröffentlichungstag und Bekanntmachung des Hinweises auf die Patenterteilung: **17.07.2019**
(21) Anmeldenummer: 10700252.9
(22) Anmeldetag: 14.01.2010
(51) Int. Cl.: B60T 7/04, B60T 8/40, B60T 13/66

(54) **BREMS SYSTEM VOM TYP "BRAKE-BY-WIRE"**
"BRAKE-BY-WIRE" TYPE BRAKING SYSTEM
SYSTÈME DE FREINAGE DE TYPE "FREIN À COMMANDE ÉLECTRIQUE"

(30) Priorität: 15.01.2009 DE 102009000235; 07.05.2009 DE 102009002885
(43) Veröffentlichungstag der Anmeldung: 23.11.2011
(73) Patentinhaber: Continental Teves AG & Co. OHG, 60488 Frankfurt am Main (DE)
(72) Erfinder: SELLINGER, Thomas, 63073 Offenbach (DE); DROTT, Peter, 65936 Frankfurt (DE); KRÄMER, Horst, 65462 Ginsheim-Gustavsburg (DE)
(86) Internationale Anmeldenummer: PCT/EP2010/050368
(87) Internationale Veröffentlichungsnummer: WO 2010/081840

(56) Entgegenhaltungen:
- WO-A1-2008/107023
- DE-A1- 10 230 865
- DE-A1-102007 010 513
- DE-A1-102007 016 754

## Beschreibung

Bremssystem vom Typ "Brake-by-wire" für ein Kraftfahrzeug, mit einem mittels eines Bremspedals einer Pedaleinheit betätigbaren Bremsdruckgeber, der außerhalb der Betriebsart "Brake-by-wire" mit Radbremsen des Fahrzeuges verbindbar ist, mit einer mittels einer elektronischen Steuereinheit ansteuerbaren Druckquelle, die in der Betriebsart "Brake-by-wire" mit den Radbremsen des Fahrzeuges verbindbar ist, mit Mitteln zum Erfassen eines Fahrerverzögerungswunsches, und mit einem mit dem Bremspedal zusammenwirkenden Pedalwegsimulator, der durch wenigstens ein Simulatorelement gebildet ist und durch den in der Betriebsart "Brake-by-wire" eine auf das Bremspedal wirkende Rückstellkraft unabhängig von der Ansteuerung der Druckquelle simulierbar ist.

WO 2008/107023 A1 offenbart eine Betätigungseinheit für eine Kraftfahrzeugbremsanlage bei einer Bremsanlage vom Typ "Brake-by-wire" verwendeten Einrichtung zum Zu- und Abschalten eines Pedalwegsimulators. Um die Betriebssicherheit zu erhöhen wird zwischen einem Kolben und einer diesen betätigenden Kolbenstange eine Gelenkverbindung vorgesehen, die eine allseitige Schwenkbewegung der Kolbenstange ermöglicht.

Ein derartiges Bremssystem ist aus der DE 10 2004 011 622 A1 bekannt und wird dort insbesondere im Zusammenhang mit Fig. 15 beschrieben. Der Pedalwegsimulator wird bei dem vorbekannten Bremssystem von einem Gehäuse aufgenommen, in das ein mit dem Bremspedal drehfest verbundenes Kraftübertragungselement ragt. Eine mittels der elektronischen Steuereinheit ansteuerbaren elektrohydraulischen Einrichtung, die durch eine Kolben-Zylinder-Anordnung gebildet ist, ermöglicht in der Betriebsart "Brake-by-wire" ein Zuschalten und außerhalb der Betriebsart "Brake-by-wire" ein wenigstens teilweises Abschalten des Pedalwegsimulators, indem sich das Gehäuse des Pedalwegsimulators über einen fest mit dem Gehäuse verbundenen Hebelarm an der elektrohydraulischen Einrichtung abstützt. Als nachteilig wird bei dem vorbekannten Bremssystem angesehen, dass die Funktion der elektrohydraulischen Einrichtung überwacht werden muss. Ferner ist das bekannte System kostenintensiv und weist eine hohe Bauteilanzahl auf.

Es ist daher Aufgabe der vorliegenden Erfindung, ein Bremssystem vom Typ "Brake-by-wire" vorzuschlagen, welches kostengünstiger, einfacher und platzsparender aufgebaut ist.

Diese Aufgabe wird erfindungsgemäß durch die kennzeichnenden Merkmale des unabhängigen Patentanspruchs 1 gelöst. Dabei ist vorgesehen, dass eine Kraft-Weg-Charakteristik des Pedalwegsimulators steuerbar vorgesehen ist. Durch die Steuerung der Pedalcharakteristik kann ein zusätzlicher Weg mit limitiertem Kraftniveau freigegeben werden, wenn das "Brake-by-wire"-System ausfällt oder eine höhere Bremsleistung erforderlich ist, so dass keine Abschaltung des Pedalwegsimulators in der Rückfallebene mehr erfolgen muss. Somit ist von Vorteil, dass keine Einrichtung zur Ab- oder Zuschaltung des Pedalwegsimulators mehr nötig ist, wodurch eine Überwachung derselben entfällt.

Vorzugsweise kann die Steuerung der Kraft-Weg-Charakteristik des Pedalwegsimulators kraftabhängig vorgesehen sein, so dass ab einer vorbestimmten auf das Bremspedal aufgebrachten Fußkraft eine Verlängerung des Pedalwegs ermöglicht wird und die hierbei aufzubringende Reaktionskraft einen definierten Grenzwert nicht überschreitet. Alternativ könnte die Steuerung der Kraft-Weg-Charakteristik des Pedalwegsimulators und somit auch der Pedalcharakteristik auch wegabhängig vorgesehen sein.

Eine vorteilhafte Ausführungsform der Erfindung sieht vor, dass der Pedalwegsimulator an einem fahrzeugfesten Bauteil und dem Bremspedal angelenkt ist. Dabei kann der vorhandene Raum zwischen dem fahrzeugfesten Bauteil und dem Bremspedal zumindest teilweise als Bauraum für den Pedalwegsimulator genutzt werden.

Eine andere vorteilhafte Ausbildung der Erfindung sieht dagegen vor, dass der Pedalwegsimulator zwischen einem fahrzeugfesten Bauteil und einem koaxial zum Bremspedal drehbaren Bauteil angeordnet ist, wodurch der Pedalwegsimulator hinsichtlich seiner Dimensionierung nicht an den sehr begrenzten Baumraum zwischen dem fahrzeugfesten Bauteil und dem Bremspedal angepasst werden muss.

Vorzugsweise ist das fahrzeugfeste Bauteil ein Teil der Pedaleinheit, so dass der Pedalwegsimulator als ein Bauteil der vormontierbaren Pedaleinheit vorgesehen werden kann.

Eine einfache Steuerung der Pedalcharakteristik kann vorteilhafterweise dadurch erreicht werden, indem zur Verlängerung des Pedalwegs ein Federelement vorgesehen ist, welches ab einer vorbestimmten auf das Bremspedal aufgebrachten Fußkraft komprimierbar ist und somit eine Verlängerung des Pedalwegs ermöglicht.

Gemäß einer vorteilhaften Ausführungsform der Erfindung ist das Federelement als eine oder mehrere vorgespannte Federn vorgesehen.

Vorzugsweise ist das vorgespannte Federelement als Federpaket aus Tellerfedern oder als wenigstens eine Schraubendruckfeder vorgesehen.

Eine alternative vorteilhafte Ausführung der Erfindung sieht vor, dass das Federelement als Elastomer vorgesehen ist. Ferner ist es im Rahmen der Erfindung denkbar, eine Kombination von verschiedenen Federtypen sowie eine Kombination von Federn und anderen federnden Elementen als Federelement vorzusehen.

Eine vorteilhaft vormontierbare Baueinheit wird dadurch ermöglicht, dass das vorgespannte Federelement zwischen einem ersten, das Simulatorelement tragenden Betätigungselement und einem zweiten Betätigungselement gefesselt angeordnet ist.

Gemäß einer vorteilhaften Ausführungsform ist ein drittes Betätigungselement vorgesehen, an welchem das Simulatorelement angepresst wird und das mittelbar oder unmittelbar an dem Bremspedal oder dem koaxial zum Bremspedal beweglichen Bauteil befestigt ist.

Ein besonders einfacher Aufbau des Pedalwegsimulators wird gemäß einer vorteilhaften Ausführungsform dadurch erzielt, dass das Federelement zwischen dem koaxial zum Bremspedal drehbaren Bauteil und einem Betätigungselement angeordnet ist und das Simulatorelement mittels einer Aufnahme an dem fahrzeugfesten Bauteil befestigt ist.

Um die Kennlinie des Bremssystems in einfacher Weise zusätzlich zu den vorgegebenen Eigenschaften der anderen Bauteile des Pedalwegsimulators verändern zu können, sieht eine vorteilhafte Ausführungsform der Erfindung vor, dass ein Abstand zwischen dem Simulatorelement und dem dritten Betätigungselement einstellbar vorgesehen ist.

Eine weitere vorteilhafte Ausführungsform der Erfindung sieht vor, dass das zweite Betätigungselement mittelbar an dem Bremspedal oder dem koaxial zum Bremspedal beweglichen Bauteil befestigt ist und das Simulatorelement in der Betriebsart "Brake-by-wire an eine Seitenwand eines Gehäuses des Pedalwegsimulators angepresst wird, wobei das vorgespannte Federelement in Reihe zu einer Rückstellfeder des Bremspedals angeordnet ist.

Zur einfachen Überwachung des Pedalwegsimulatorhubes kann gemäß einer vorteilhaften Ausführungsform vorgesehen werden, dass der Pedalwegsimulator einen Wegsensor aufweist.

Vorzugsweise umfasst der Wegsensor einen Permanentmagneten als Signalgeber und ein Sensorelement. Andere Sensorvarianten sind jedoch im Rahmen der Erfindung ebenfalls einsetzbar.

Die Ansprech- und Rückstellkraft des Bremspedals kann in einfacher Weise an die unterschiedlichen Anforderungen angepasst werden, indem eine Rückstellfeder des Bremspedals am Pedalwegsimulator und/oder als separates Federelement vorgesehen ist.

Gemäß einer vorteilhaften Ausführungsform der Erfindung ist zur verbesserten Montage der Pedaleinheit mit dem Bremskraftverstärker auf dem Bremspedal ein Halteelement befestigt, welches eine trichterförmige Aufnahme aufweist, die in Richtung einer Kolbenstange des Bremskraftverstärkers ausgerichtet ist. Gleichzeitig dient die Anordnung zur Führung der Kolbenstange nach der Montage.

Weitere Merkmale und Vorteile der Erfindung werden in der nachfolgenden Beschreibung unter Bezugnahme auf die beiliegenden Zeichnungen an drei Ausführungsbeispielen näher erläutert. In den Zeichnungen zeigen schematisch:
- Fig. 1: eine Schnittdarstellung des aus dem Stand der Technik bekannten Bremssystems der eingangs genannten Gattung;
- Fig. 2: eine vereinfachte schematische Seitenansicht der Anordnung des Pedalwegsimulators des erfindungsgemäßen Bremssystems eines ersten Ausführungsbeispiels;
- Fig. 3: eine vergrößerte Schnittdarstellung des Pedalwegsimulators gemäß Fig. 2;
- Fig. 4: eine vereinfachte schematische Vorderansicht der Anordnung des Pedalwegsimulators des erfindungsgemäßen Bremssystems des ersten Ausführungsbeispiels gemäß Fig. 2;
- Fig. 5: eine Schnittdarstellung eines Pedalwegsimulators eines zweiten Ausführungsbeispiels;
- Fig. 6: eine Schnittdarstellung eines Pedalwegsimulators eines dritten Ausführungsbeispiels;
- Fig. 7: ein Kraft-Weg-Diagramm des erfindungsgemäßen Bremssystems;
- Fig. 8: eine Pedaleinheit eines vierten Ausführungsbeispiels;
- Fig. 9: die Pedaleinheit gemäß Fig. 8 in einer anderen Ansicht;
- Fig. 10: eine vergrößerte Ansicht der Pedaleinheit gemäß Fig. 8;
- Fig. 11: ein Teil des Pedalwegsimulators des vierten Ausführungsbeispiels gemäß den Fig. 8 bis 10;
- Fig. 12: eine weitere Ansicht der Pedaleinheit des vierten Ausführungsbeispiels;
- Fig. 13: eine vergrößerte Darstellung der Einstellschraube der Pedaleinheit gemäß Fig. 8;
- Fig. 14: eine Pedaleinheit eines fünften Ausführungsbeispiels;
- Fig. 15: eine vergrößerte Ansicht der Pedaleinheit gemäß Fig. 14 und
- Fig. 16: einen Längsschnitt einer Pedaleinheit eines sechsten Ausführungsbeispiels.

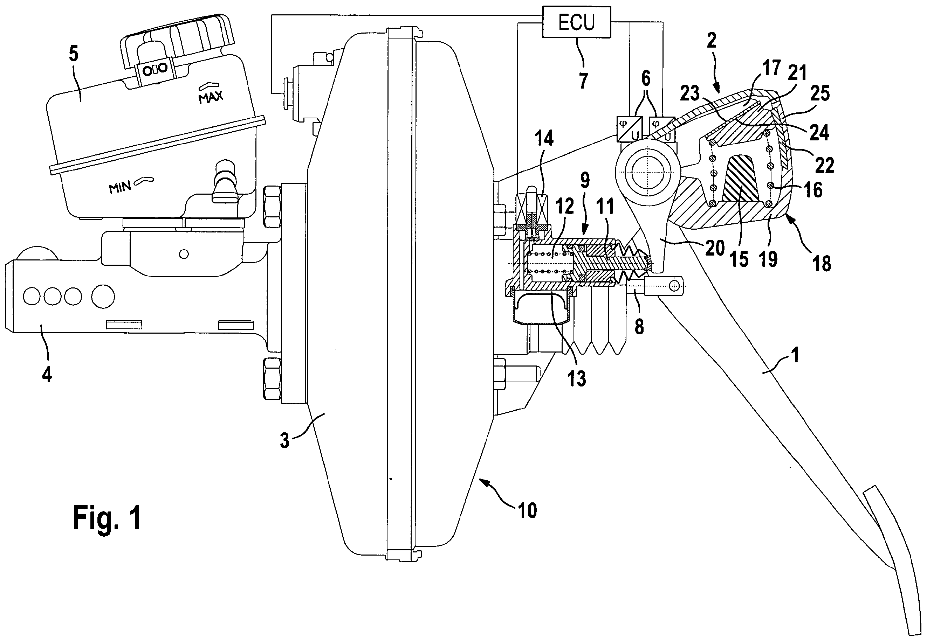

Das in Fig. 1 dargestellte Bremssystem eines Kraftfahrzeuges vom Typ "Brake-by-wire" ist aus dem Stand der Technik bekannt und besteht im Wesentlichen aus einer Bremsbetätigungseinheit 10, einem Bremspedal 1, einem Pedalwegsimulator 2, einer lediglich schematisch dargestellten elektronischen Steuereinheit 7 sowie nicht gezeigten, ggf. unter Zwischenschaltung einer hydraulischen Steuer- bzw. Regeleinheit an die Bremsbetätigungseinheit 10 angeschlossenen Radbremsen. Die Bremsbetätigungseinheit 10 wird durch einen Bremskraftverstärker, vorzugsweise einen Unterdruckbremskraftverstärker 3, einen dem Bremskraftverstärker 3 nachgeschalteten Hauptbremszylinder, beispielsweise einem Tandemhauptzylinder 4, an dessen nicht dargestellte Druckräume die vorhin erwähnten Radbremsen des Kraftfahrzeugs angeschlossen sind, sowie einen dem Hauptbremszylinder 4 zugeordneten Druckmittelvorratsbehälter 5 gebildet. Das Bremspedal 1, das der Betätigung des Bremskraftverstärkers 3 durch den Fahrer dient, wirkt insbesondere in der Betriebsart "Brake-by-wire" mit dem Pedalwegsimulator 2 zusammen, der dem Fahrer das gewünschte Bremspedalgefühl vermittelt. Eine vorzugsweise redundant ausgeführte Sensoreinrichtung 6 zur Erfassung eines Fahrerverzögerungswunsches erzeugt in Abhängigkeit von der Betätigung des Bremspedals 1 Steuersignale, die der elektronischen Steuereinheit 7 zugeführt werden, durch deren Ausgangssignale u. a. ein dem Bremskraftverstärker 3 zugeordneter, nicht dargestellter Elektromagnet ansteuerbar ist, der eine vom Fahrerwillen unabhängige Betätigung eines pneumatischen Steuerventils ermöglicht, das eine Luftzufuhr zum Bremskraftverstärker 3 steuert. Ein zwischen dem Ende einer mit dem Bremspedal 1 gekoppelten Kolbenstange 8 und einem Steuerkolben des vorhin genannten Steuerventils vorgesehener axialer Spalt gewährleistet in der Betriebsart "Brake-by-wire" eine Entkopplung der kraftübertragenden Verbindung zwischen dem Bremspedal 1 und dem Bremskraftverstärker 3.

Der Pedalwegsimulator 2, durch den, wie bereits erwähnt, in der Betriebsart "Brake-by-wire" eine auf das Bremspedal wirkende Rückstellkraft unabhängig von einer Betätigung des Bremskraftverstärkers 3 simuliert wird, ist derart ausgeführt, dass er in der Betriebsart "Brake-by-wire" bei der Entkopplung der kraftübertragenden Verbindung zwischen dem Bremspedal 1 und dem Bremskraftverstärker 3 zuschaltbar und außerhalb der Betriebsart "Brake-by-wire" abschaltbar ist. Das Zu- sowie das Abschalten des Pedalwegsimulators 2 erfolgt durch eine elektrohydraulische Einrichtung 9, die im Wesentlichen durch eine mittels eines elektromagnetisch betätigbaren Absperrventils 14 absperrbare hydraulische Zylinder-Kolbenanordnung 11, 12 gebildet ist. Die Zylinder-Kolbenanordnung 11, 12 weist einen von einem Kolben 11 begrenzten hydraulischen Druckraum 12 sowie eine mit dem Druckraum 12 in Verbindung stehende hydraulische Niederdruckkammer 13 auf, wobei das Absperrventil 14 das Absperren bzw. das Freigeben der Verbindung ermöglicht. Das Absperrventil 14, das mittels der Ansteuersignale der elektronischen Steuereinheit 7 betätigbar bzw. umschaltbar ist, ist als ein elektromagnetisch betätigbares, stromlos offenes (SO-) 2/2-Wegeventil ausgebildet. Dem Druckausgleich zwischen Druckraum 12 und Niederdruckkammer 13 dient ein zum Druckraum 12 hin öffnendes Rückschlagventil, das in Fig. 1 nicht dargestellt ist.

Bei der aus dem Stand der Technik vorbekannten Anordnung weist der Pedalwegsimulator eine als Druckfeder vorgesehenes Federelement 16 auf, welches zwischen dem Bremspedal 1 bzw. einem mit dem Bremspedal 1 drehfest verbundenen Kraftübertragungsteil 17 und einem zweiarmigen Hebel 18 eingespannt ist. Der zweiarmige Hebel 18 ist gegenüber dem Bremspedal 1 koaxial mit diesem versetzt begrenzt drehbar gelagert, wobei sein erster Arm 19 eine Abstützfläche für das Federelement 16 bildet, während sich sein zweiter Arm 20 am hydraulischen Kolben 11 der Kolben-Zylinderanordnung 9 abstützt.

Das Kraftübertragungsteil 17 wirkt mit einem elastischen, vorzugsweise aus Gummi hergestellten Simulatorelement 15 für das Bremspedal 1 zusammen. Zur Erzeugung einer Hysterese, die bei steigendem Hub des Pedalwegsimulators 2 zusätzlich zur Kraft des Federelementes 16 Reibkräfte erzeugt, die der am Bremspedal 1 wirkenden Betätigungskraft entgegen wirken, liegt an dem Kraftübertragungsteil 17 unter der Wirkung des Federelementes 16 ein Reibglied 21 an. Das Reibglied 21 wirkt mit einer Reibfläche 22 zusammen. Die Anlage des Reibglieds 21 am Kraftübertragungsteil 17 erfolgt mittels schräg angeordneter Anlageflächen 23, 24 derart, dass bei der Betätigung des Pedalwegsimulators 2 eine Kraftkomponente entsteht, die das Reibglied 21 gegen die Reibfläche 22 drückt. Die vorhin genannten Elemente 16, 17, 21, 22 sind vorzugsweise in einem Gehäuse 25 angeordnet, das vorzugsweise einteilig mit dem ersten Arm 19 des zweiarmigen Hebels 18 ausgebildet ist.

Die Funktionsweise des oben beschriebenen Bremssystems ist dem auf dem technischen Gebiet von "Brake-by-wire"-Systemen tätigen Fachmann bekannt. In der in Fig. 1 dargestellten Ruhestellung des Bremssystems, die auch der Rückfallebene entspricht, ist der hydraulische Druckraum 12 der elektrohydraulischen Einrichtung 9 über das stromlos offene Absperrventil 14 mit der Niederdruckkammer 13 verbunden. Bei der Betätigung des Bremspedals 1 wird seine Bewegung durch die Sensoreinrichtung 6 erfasst und der elektronischen Steuereinheit 7 gemeldet, die gleichzeitig Steuersignale zum Ansteuern des vorhin erwähnten Elektromagneten sowie des Absperrventils 14 erzeugt, so dass die Verbindung zwischen dem Druckraum 12 und der Niederdruckkammer 13 unterbrochen wird, wodurch der Pedalwegsimulator 2 zugeschaltet wird. Das Absperrventil 14 ist also in der Betriebsart "Brake-by-wire" geschlossen, sodass sich weder der Arm 20 noch das Gehäuse 25 des Pedalsimulators bewegen können. Bei einer Betätigung des Bremspedals 1 durch den Fahrzeugführer wird daher das Federelement 16 komprimiert. Außerhalb der Betriebsart "Brake-by-wire" ist das Ventil 14 geöffnet und bei einer Betätigung des Bremspedals 1 dreht sich das Simulatorgehäuse 25 mit dem Bremspedal 1 mit, sodass die vom Fahrzeugführer eingeleitete Kraft nicht im Pedalwegsimulator 2 absorbiert wird, sondern auf den Unterdruckbremskraftverstärker 3 wirkt.

Bei einem Ausfall der Fahrzeugelektronik bzw. einem Bordnetzausfall kann das Absperrventil 14 nicht umgeschaltet werden, so dass die Bremsung in der Rückfallebene erfolgt. Bei der Betätigung des Bremspedals 1 dreht sich der zweiarmige Hebel 18 unter der Wirkung des Federelementes 16 mit dem Bremspedal 1 mit, so dass der Kolben 11 der elektrohydraulischen Einrichtung 9 in der Zeichnung nach links verschoben wird und das Druckmittel aus dem Druckraum 12 in die Niederdruckkammer 13 verschiebt. Der Simulator 2 ist abgeschaltet.

Der grundsätzliche Aufbau und die Funktion des Brake-by-wire-Bremssystems sind aus dem Stand der Technik wie beschrieben bekannt, so dass bei der Beschreibung der nachfolgend ausgeführten Ausführungsbeispiele eines erfindungsgemäßen Bremssystem darauf verzichtet und lediglich auf die erfindungsgemäßen Unterschiede eingegangen wird.

Um ein einfacheres und kostengünstigeres Bremssystem vom Typ "Brake-by-wire" darzustellen, ist gemäß den nachfolgend beschriebenen Ausführungsbeispielen vorgesehen, dass eine Kraft-Weg-Charakteristik des Pedalwegsimulators 2, der durch wenigstens ein Simulatorelement 15 gebildet ist, steuerbar vorgesehen ist. Durch die Steuerung der Pedalcharakteristik kann ein zusätzlicher Weg mit limitiertem Kraftniveau freigegeben werden, wenn das "Brake-by-wire"-System ausfällt oder eine höhere Bremsleistung erforderlich ist, so dass keine gesonderte Abschaltung des Pedalwegsimulators in der Rückfallebene gemäß dem beschriebenen Stand der Technik außerhalb der Betriebsart "Brake-by-wire" mehr erfolgen muss. Somit ist besonders von Vorteil, dass keine Einrichtung zur Ab- oder Zuschaltung des Pedalwegsimulators mehr nötig ist, wodurch auch eine Überwachung derselben entfallen kann.

Die Steuerung der Kraft-Weg-Charakteristik, d.h. des Pedalwegs erfolgt bei den nachfolgen beschriebenen Ausführungsbeispielen kraftabhängig, so dass ab einer vorbestimmten auf das Bremspedal 1 aufgebrachten Fußkraft eine Verlängerung des Pedalwegs ermöglicht wird und die hierbei aufzubringende Reaktionskraft einen definierten Grenzwert nicht überschreitet.

Der Pedalwegsimulator 2 ist zwischen einem fahrzeugfesten Bauteil der Pedaleinheit, dem sogenannten Pedalbock 27, und dem Bremspedal 1 oder einem sich koaxial zum Bremspedal 1 drehbaren Bauteil 26 in Form eines Hebels angeordnet. Grundsätzlich ist es bei entsprechenden Platzverhältnissen möglich, den Pedalwegsimulator 2 an dem Pedalbock 27 und dem Bremspedal 1 direkt anzulenken. Als fahrzeugfestes Bauteil kann unter Umständen auch ein Bauteil Verwendung finden, welches nicht Teil der Pedaleinheit ist.

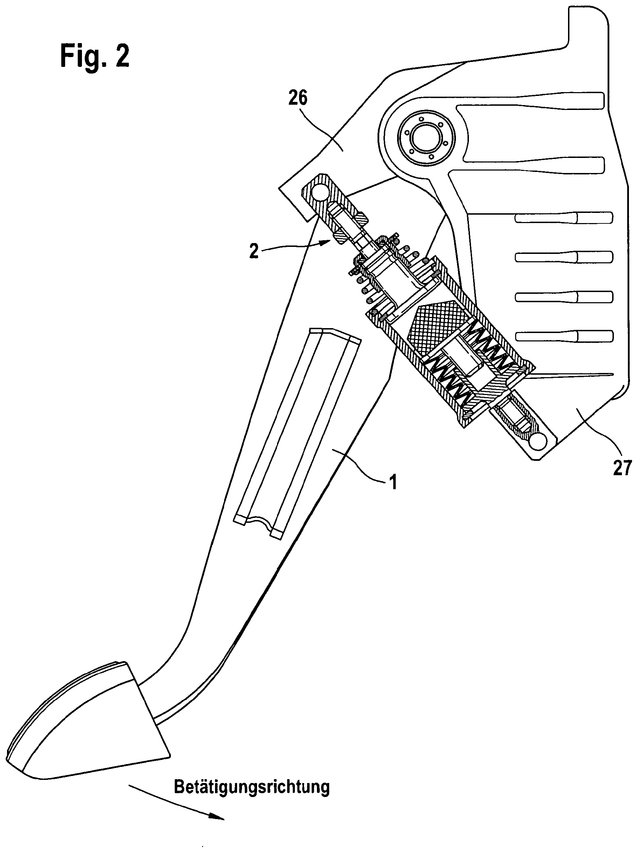

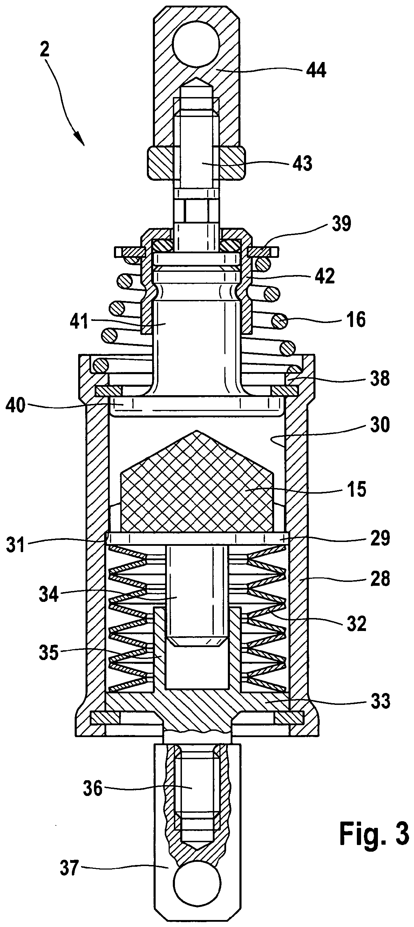

Fig. 2 zeigt eine vereinfachte schematische Seitenansicht der Anordnung des Pedalwegsimulators 2 eines ersten Ausführungsbeispiels, welcher in Fig. 3 vergrößert dargestellt ist.

Wie aus Fig. 3 ersichtlich ist, weist der Pedalwegsimulator 2 des ersten Ausführungsbeispiels ein im Wesentlichen hülsenförmiges Gehäuse 28 auf, in welchem ein erstes, das Simulatorelement 15 tragendes, scheibenförmiges Betätigungselement 29 verschiebbar angeordnet ist. Ein an einer Innenwand 30 des Gehäuses 28 vorgesehener Anschlag 31 begrenzt dabei die Bewegung des Betätigungselementes 29, welches durch ein als Federpaket vorgesehenes, vorgespanntes Federelement 32 an dem Anschlag 31 gehalten wird. Das vorgespannte Federelement kann im Rahmen der Erfindung durch jedes andere Federelement ersetzt werden, welches ab einer vorbestimmten auf das Bremspedal 1 aufgebrachten Fußkraft komprimierbar ist. Denkbar sind beispielsweise als Federelement ein Elastomer oder eine Kombination von Federn.

Das Federpaket 32, welches in diesem Ausführungsbeispiel mehrere in Reihe geschaltete Tellerfedern aufweist, stützt sich an seinem Ende an einem zweiten Betätigungselement 33 ab, das zur Führung eines mittig angeordneten, zylindrischen Fortsatzes 34 des ersten Betätigungselementes 29 einen hohlzylindrischen Vorsprung 35 aufweist. Zur Befestigung am Pedalbock 27 ist an dem zweiten Betätigungselement 33 ein Gewindefortsatz 36 angeformt, welcher in ein Befestigungselement 37 eingeschraubt werden kann.

Eine Rückstellfeder 16, welche der Positionierung des Bremspedals 1 und zur Bereitstellung einer Ansprechkraft dient, stützt sich in diesem Ausführungsbeispiel an einem Bund 38 des Gehäuses 28 sowie an einem Anschlag 39 ab.

Wie Fig. 3 zu entnehmen ist, weist der Pedalwegsimulator 2 ein weiteres, drittes Betätigungselement 40 auf, an welchem das Simulatorelement 15 angepresst wird. Ein zylindrischer Fortsatz 41 des dritten Betätigungselementes 40 ist mittels eines Verbindungselementes 42 mit einer Gewindestange 43 verbunden, die zur Befestigung des Pedalwegsimulators 2 an dem Hebel 26 in ein Befestigungselement 44 eingeschraubt werden kann. Der Anschlag 39 der Rückstellfeder 16 ist an dem Verbindungselement 42 befestigt vorgesehen.

Bei einer Betätigung des Bremspedals 1 durch den Fahrzeugführer in Betätigungsrichtung wird durch die gleichzeitige Betätigung des Hebels 26 die Rückstellfeder 16 komprimiert und das dritte Betätigungselement 40 verschiebt sich in Richtung Simulatorelement 15.

Durch das Einknicken des Federpaketes 32 ist eine Verlängerung des Pedalwegs möglich und es kann ein zusätzlicher Weg freigegeben werden, wenn das "Brake-by-wire"-System ausfällt oder eine höhere Bremsleistung erforderlich ist. Hierdurch ist keine zusätzliche Einrichtung zur Ab- oder Zuschaltung des Pedalwegsimulators 2 mehr nötig, wodurch eine Überwachung derselben entfällt. Im Unterschied zum bekannten Bremssystem ist damit der Pedalwegsimulator 2 auch in der Rückfallebene aktiv und wird bei jeder Bremspedalbetätigung bewegt.

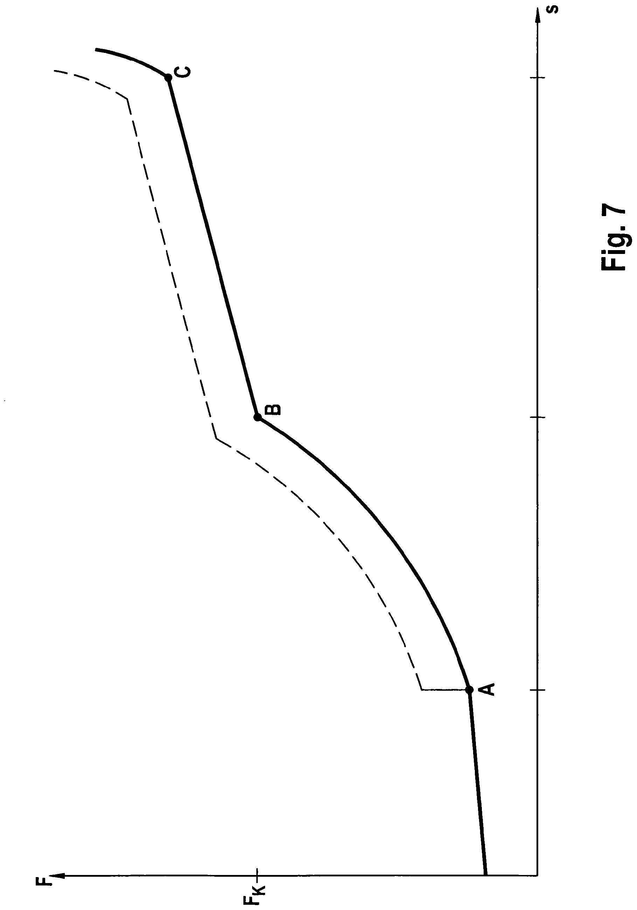

Die in Fig. 7 gezeigte Kennlinie des Bremssystems, welche im Nachfolgenden näher erläutert wird, ist im "Brake-by-wire"-Betrieb sowie in der Rückfallebene nahezu gleich. Es ist in der Rückfallebene lediglich ein Kraftanteil des Bremskraftverstärkers 3 hinzu zu addieren, welcher vorteilhafterweise in bestimmten Betriebsarten die Rückmeldung auf den Fahrer entkoppelt. Derartige Bremskraftverstärker sind beispielsweise als mechanischer Bremsassistent bekannt. Die Kennlinie in der Rückfallebene ist in Fig. 7 gestrichelt dargestellt.

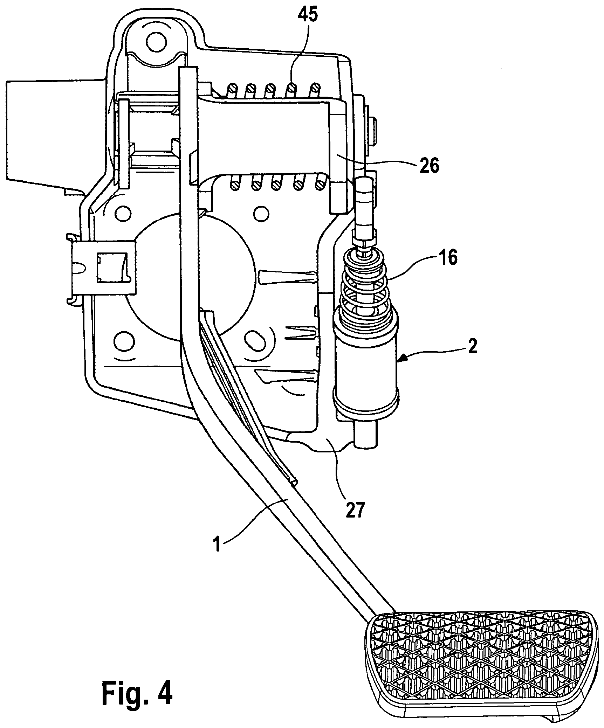

Fig. 4 zeigt eine vereinfachte schematische Vorderansicht der Anordnung des Pedalwegsimulators 2 des ersten Ausführungsbeispiels. Es ist erkennbar, dass der Pedalwegsimulator 2 außerhalb des Bremspedals 1 und des Pedalbocks 27 angeordnet ist. Vorteilhafterweise kann der Pedalwegsimulator 2 auch innerhalb des Pedalbocks 27 vorgesehen werden, so dass der Bauraum der gesamten Pedaleinheit weiter verringert werden kann. Ferner ist es ebenso denkbar, den Pedalwegsimulator 2 direkt an dem Bremspedal 1 anzulenken.

Zusätzlich zu der Rückstellfeder 16 kann eine weitere Rückstellfeder 45 vorgesehen werden, die nicht direkt am Pedalwegsimulator 2 angeordnet ist. Grundsätzlich ist es auch möglich, die Rückstellfeder 16 entfallen zu lassen, so dass die Rückstellfeder 45 die Funktion hinsichtlich der Ansprech- und der Rückstellkraft gänzlich übernimmt.

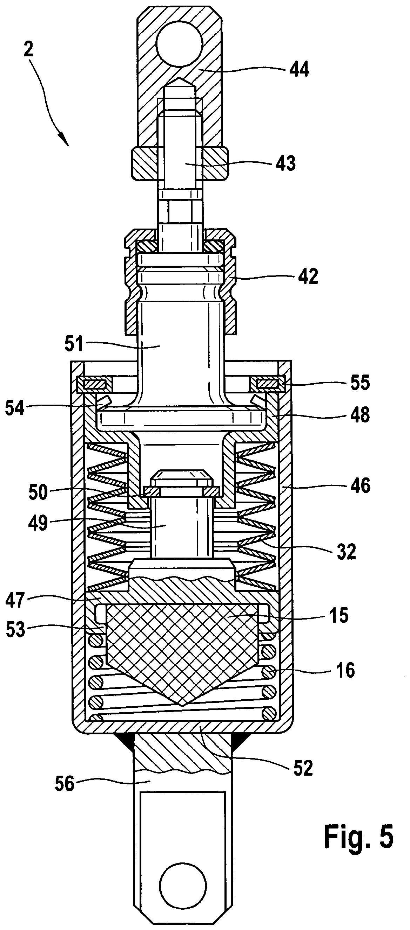

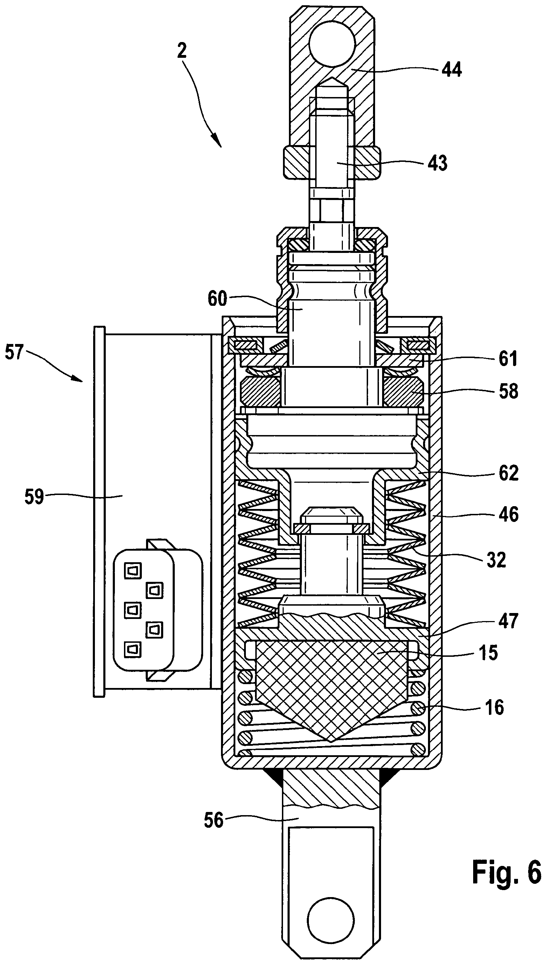

Die Fig. 5 und 6 zeigen jeweils eine Schnittdarstellung eines Pedalwegsimulators 2 eines zweiten und eines dritten Ausführungsbeispiels, dessen Funktion dem ersten Ausführungsbeispiel gleicht. Es wird nachfolgend lediglich auf die konstruktiven Unterschiede eingegangen. Gleiche Bauteile sind mit gleichen Bezugszeichen versehen.

Gemäß Fig. 5 ist ersichtlich, dass die Rückstellfeder 16 in einem Gehäuse 46 des Pedalwegsimulators 2 vorgesehen ist. Weiter ist ein erstes, das Simulatorelement 15 tragendes, im Wesentlichen scheibenförmiges Betätigungselement 47 mit einem zweiten Betätigungselement 48 und dem Federpaket 32 als gefesselte Einheit vorgesehen, die vorteilhafterweise eine vormontierbare Baugruppe darstellt. Zur Fesselung weist das erste Betätigungselement 47 einen zylindrischen Fortsatz 49 auf, welcher eine Öffnung des zweiten Betätigungselementes 48 durchragt und mittels eines Befestigungsringes 50 darin gehalten wird.

Bei einer Betätigung wird das zweite Betätigungselement 48 und damit auch das Federpaket 32 und das erste Betätigungselement 47 mittels eines weiteren Betätigungselementes 51 verschoben, das durch das zum ersten Ausführungsbeispiel beschriebene Verbindungselement 42 mit einer Gewindestange 43 verbunden ist.

Die Rückstellfeder 16 stützt sich zwischen einem an dem ersten Betätigungselement 47 angeformten Bund 53 und einer Seitenwand 52 des Gehäuses 46 ab.

Weiter ist Fig. 5 zu entnehmen, dass das Betätigungselement 51 durch umgeformte Laschen 54 des zweiten Betätigungselementes 48 daran befestigt ist. Mittels eines Anschlages 55 werden die gefesselte Einheit sowie die Rückstellfeder 16 verliersicher in dem Gehäuse 46 gehalten.

Zur Befestigung am Pedalbock 27 ist an eine Außenseite der Seitenwand 52 ein Befestigungselement 56 beispielsweise durch Anschweißen befestigt.

Es wird deutlich, dass sich das zweite Ausführungsbeispiel zum ersten dadurch unterscheidet, dass bei Betätigung die komplette gefesselte Baueinheit umfassend das erste und das zweite Betätigungselement 47,48 sowie das Federpaket 32 gegen die Federkraft der Rückstellfeder 16 in Richtung Seitenwand 52 bewegt. Die Rückstellfeder 16 und das Federpaket 32 sind bei dieser Ausführung direkt in Reihe geschaltet. Hierdurch kann ein drittes Betätigungselement entfallen und der Aufbau des Pedalwegsimulators 2 kann vereinfacht werden.

Im Unterschied zu Fig. 5 zeigt Fig. 6 einen Pedalwegsimulator 2, welcher zusätzlich einen Wegsensor 57 aufweist. Dieser umfasst einen Permanentmagneten 58 als Signalgeber und ein am Gehäuse 56 angeordnetes Sensorelement 59. Wie aus Fig. 6 ersichtlich ist, ist der Permanentmagnet 58 zwischen einem Element 60 und einer daran befestigten Anschlagscheibe 61 gehalten angeordnet. Andere Sensortypen können ebenfalls für diese Funktion im Rahmen der Erfindung Verwendung finden.

Das Element 60 und ein zweites Betätigungselement 62 sind als Teile der gefesselten Federpaket-Einheit miteinander formschlüssig verbunden.

Da alle innen liegenden Bauteile des Pedalwegsimulators 2 der beschriebenen Ausführungsformen bei der Betätigung bewegt werden, können so genannte "schlafende" Fehler vermieden werden und eine zusätzliche Überwachung der Funktion ist nicht erforderlich.

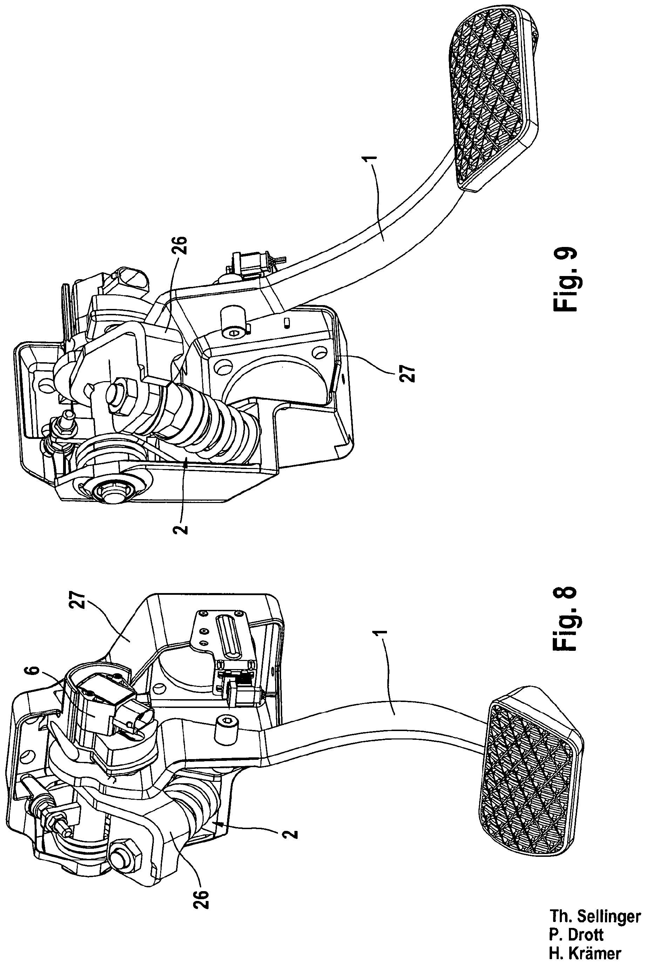

Den Fig. 8 bis 13 ist ein weiteres, viertes Ausführungsbeispiel zu entnehmen.

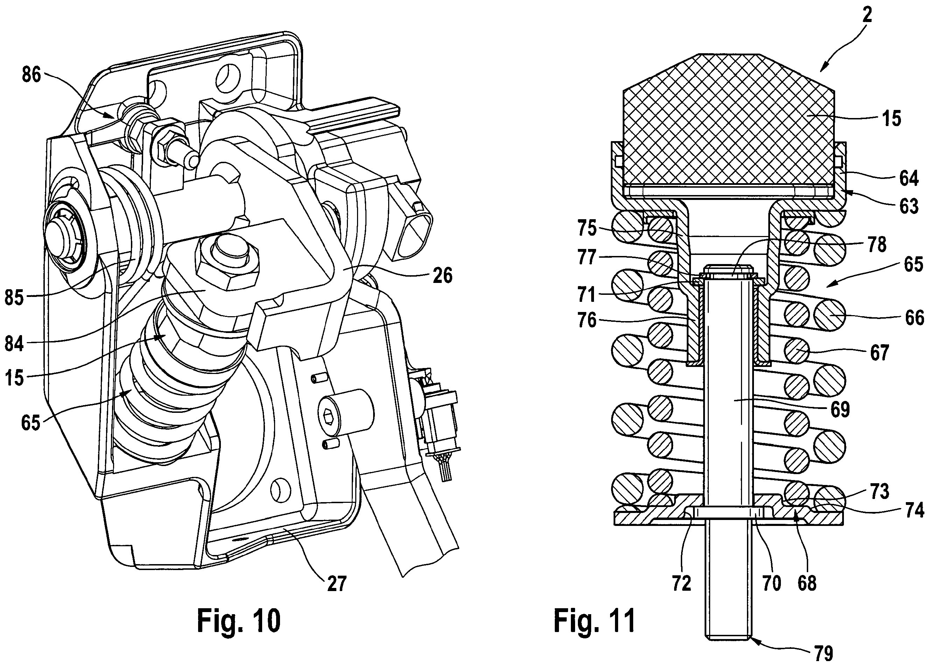

So zeigen die Fig. 8 bis 10, 12 und 13 lediglich eine Pedaleinheit des Bremssystems mit einem Pedalwegsimulator 2 in verschiedenen räumlichen Darstellungen, welcher in Fig. 11 teilweise dargestellt ist.

Im Gegensatz zu den vorstehend beschriebenen Ausführungsbeispielen weist dieses kein Gehäuse auf und zeichnet sich durch einen besonders einfachen Aufbau aus. Insbesondere aus Fig. 11 ist der wesentliche Aufbau des Pedalwegsimulators 2 ersichtlich, der ein erstes, das Simulatorelement 15 tragendes, gestuftes sowie hülsenförmiges Betätigungselement 63 aufweist. Eine erste Stufe 64 dient zum einen der Aufnahme des Simulatorelementes 15, zum anderen der Anlage eines vorgespannten Federelementes 65, welches die gleiche Funktion erfüllt wie das vorstehend beschriebene Federelement 32. Wie aus Fig. 11 hervorgeht, umfasst das Federelement 65 bei diesem Ausführungsbeispiel zwei Schraubendruckfedern 66, 67, welche an einem zweiten gestuften, scheibenförmigen Betätigungselement 68 anliegen. Die beiden Betätigungselemente 63 und 68 sind mittels eines Schaftes 69 gefesselt vorgesehen, wobei die Vorspannung des Federelements 65 die Betätigungselemente 63,68 an Anschlägen 70,71 des Schaftes 69 hält. Dabei ist der Anschlag 70 an den Schaft 69 angeformt und greift zur Positionierung in eine kleinste Stufe 72 des zweiten Betätigungselementes 68 ein. Auf der gegenüberliegenden Seite ausgebildete Stufen 73,74 dienen der Positionierung der beiden Druckfederenden.

Eine zweite und eine dritte Stufe 75,76 des ersten Betätigungselementes 63 sind derart ausgebildet, dass sich das erste Betätigungselement 63 an dem Anschlag 71 durch die Vorspannung des Federelementes 65 abstützt. Der Anschlag 71 wird mittels eines in einer Nut 78 des Schaftes 69 gehaltenen Sicherungsringes 77 auf dem Schaft 69 gehalten.

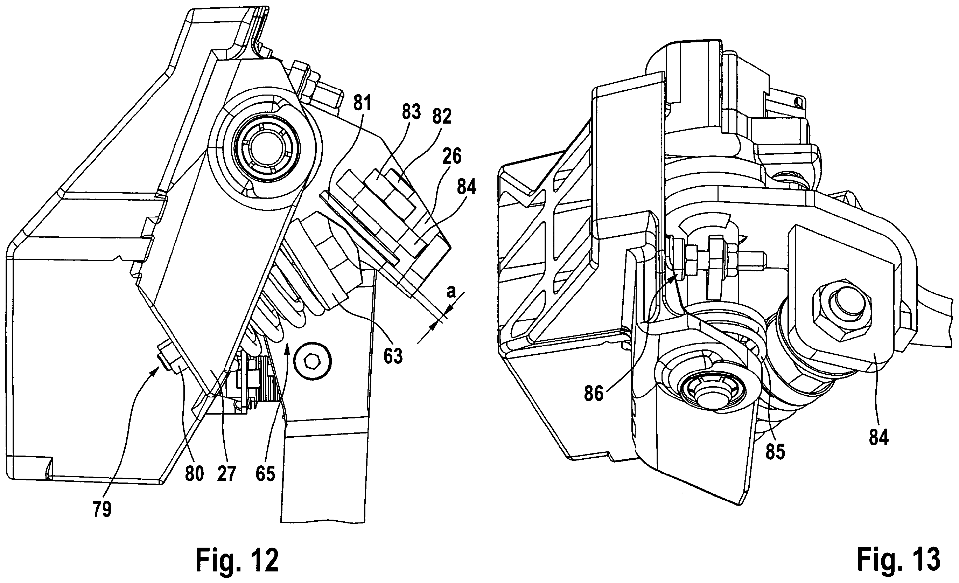

Die beiden Betätigungselemente 63 und 68 sind mit dem Federelement 65 und dem Schaft 69 als vormontierbare Baueinheit vorgesehen. Zur Befestigung dieser Baueinheit an dem Pedalbock 27 dient der Schaft 69, welcher mit seinem als Gewinde vorgesehenen Ende 79 durch eine Bohrung des Pedalbockes 27 hindurchragt und mittels einer Mutter 80 an dem Pedalbock 27 befestigt wird, wie aus Fig. 12 deutlich zu sehen ist.

Weiter weist der Pedalwegsimulator 2 ein drittes Betätigungselement 81 auf, an welchem das Simulatorelement 15 bei Betätigung angepresst wird. Ein zylindrischer, mit einem Gewinde versehener Fortsatz 82 des dritten Betätigungselementes 81 durchragt zur Befestigung einen Ansatz 84 des Hebels 26 und ist mit einer Mutter 83 befestigt.

Wie insbesondere Fig. 10 und Fig. 13 zu entnehmen ist, wird die Ansprechkraft hier über eine separate, als Schenkelfeder ausgebildete Rückstellfeder 85 dargestellt.

Ein Abstand a zwischen dem Simulatorelement 15 und dem dritten Betätigungselement 81 ist einstellbar vorgesehen, so dass die Pedalkennlinie zusätzlich zu den vorgegebenen Eigenschaften der Federelemente des Pedalswegsimulators einstellbar ist. Die Einstellung erfolgt durch den zylindrischen, mit einem Gewinde versehenen Fortsatz 82 des dritten Betätigungselementes 81 und der Mutter 83.

Die Endstellung des Bremspedals 1 ist durch einen Pedalendanschlag 86 definiert.

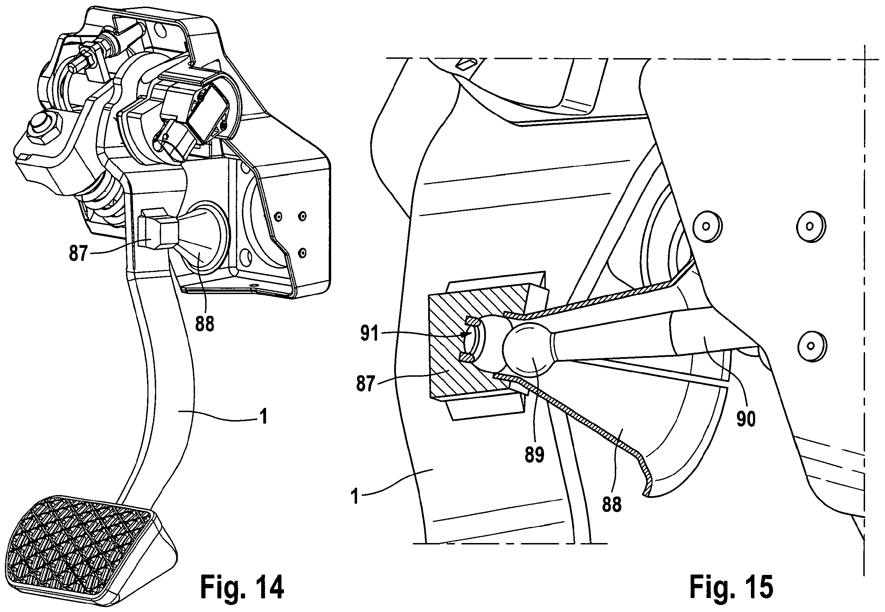

Fig. 14 und 15 zeigen eine Pedaleinheit eines fünften Ausführungsbeispiels. Es wird im nachfolgenden lediglich auf die Unterschiede zum vierten Ausführungsbeispiel eingegangen, da der restliche Aufbau der Pedaleinheit gleich vorgesehen ist.

Wie insbesondere aus Fig. 15 ersichtlich ist, ist auf dem Bremspedal 1 ein Halteelement 87 befestigt, vorzugsweise durch Schweißen, welches eine trichterförmige Aufnahme 88 aufweist, welche in Richtung einer Kolbenstange 90 des Bremskraftverstärkers 3 ausgerichtet ist.

Diese Aufnahme 88 dient zum einen der Führung eines Kolbenstangenendes 89 der Kolbenstange 90 während der Montage der Pedaleinheit mit dem Bremskraftverstärker 3. Zum anderen wird die Kolbenstange 90 nach Verbindung mit dem Bremspedal 1 durch die Aufnahme 88 und/oder durch das Haltelement 87 geführt.

Ein Dämpfungselement 91 in Form eines Dämpfungsringes reduziert Geräusche bei Kontakt des Kolbenstangenendes 89 mit dem Haltelement 87.

Ein weiterer Vorteil hierbei ist, dass das Bremspedal 1 im Bereich der Kolbenstangenverbindung nicht geschwächt wird.

Durch die Führung der Kolbenstange 90 mittels der Aufnahme 88 oder des Haltelementes 87 ist die Lücke in der Betriebsart "Brake-by-wire", d.h. die Entkopplung der kraftübertragenden Verbindung zwischen dem Bremspedal 1 und dem Bremskraftverstärker 3, sichergestellt.

Auch bei den zuletzt beschriebenen Ausführungsformen werden die für die Funktion des Pedalwegsimulators 2 wichtigen Teile bei der Betätigung bewegt, so dass "schlafende" Fehler vermieden werden und eine zusätzliche Überwachung der Funktion nicht erforderlich ist.

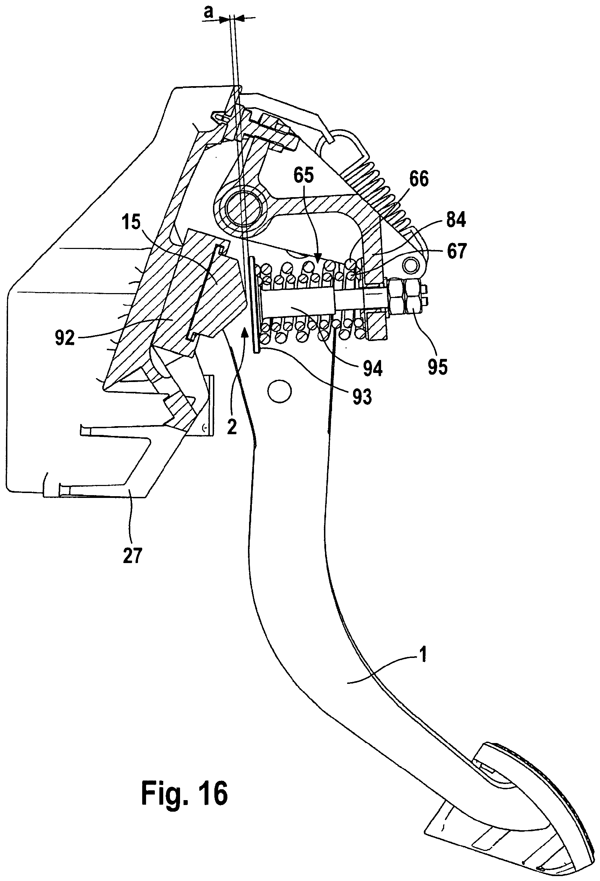

Fig. 16 zeigt einen Längsschnitt einer Pedaleinheit eines sechsten Ausführungsbeispiels. Dieses unterscheidet sich zum vierten Ausführungsbeispiel dadurch, dass das Simulatorelement 15 mittels einer Aufnahme 92 am Pedalbock 27 befestigt ist.

Ein Betätigungselement 93 ist mittels eines Schaftes 94 am Ansatz 84 befestigt, wodurch das Federelement 65 vorgespannt zwischen dem Betätigungselement 93 und dem Ansatz 84 positioniert ist. Wie ersichtlich ist, weist der Pedalwegsimulator 2 dieses Ausführungsbeispiels einen besonders einfachen Aufbau auf, da nur ein Betätigungselement vorgesehen ist.

Weiter ist der Abstand a zwischen dem Simulatorelement 15 und dem Betätigungselement 93 mittels des Schaftes 94 und zur seiner Befestigung vorgesehenen Muttern 95 einstellbar.

Im Unterschied zu den vorstehend beschriebenen Ausführungsformen kann gemäß einer nicht gezeigten Ausführungsform der Erfindung die Steuerung des Pedalwegs wegabhängig vorgesehen sein, so dass ab einem vorbestimmten Betätigungsweg des Bremspedals 1 eine Verlängerung des Pedalwegsimulators und damit des Pedalwegs ermöglicht wird.

Fig. 7 zeigt ein Kraft-Weg-Diagramm aller Ausführungsformen des erfindungsgemäßen Bremssystems. Es ist ersichtlich, dass die Kennlinie bei der Komprimierung der Rückstellfeder/Rückstellfedern 16,45,85 bis zum Punkt A linear ansteigt. Sobald das Betätigungselement 40,81 oder die Seitenwand 52 an das Simulatorelement 15 angepresst wird, steigt die Kennlinie progressiv an (Punkte A bis B). Übersteigt die auf das Bremspedal 1 aufgebrachte Fußkraft eine durch die Federkraft des Federelementes 32,65 vorgegebene Kraft F_{K}, so knickt die Kennlinie ein und verläuft zwischen den Punkten B und C mit einem deutlich flacheren Gradienten als auf dem Teilstück A bis B.

### Bezugszeichenliste

- 1: Bremspedal
- 2: Pedalwegsimulator
- 3: Bremskraftverstärker
- 4: Tandemhauptzylinder
- 5: Druckmittelvorratsbehälter
- 6: Sensoreinrichtung
- 7: Steuereinheit
- 8: Kolbenstange
- 9: Membran
- 10: Bremsbetätigungseinheit
- 11: Kolben
- 12: Druckraum
- 13: Niederdruckkammer
- 14: Absperrventil
- 15: Simulatorelement
- 16: Rückstellfeder
- 17: Kraftübertragungsteil
- 18: Hebel
- 19: Arm
- 20: Arm
- 21: Reibglied
- 22: Reibfläche
- 23: Anlagefläche
- 24: Anlagefläche
- 25: Gehäuse
- 26: Bauteil
- 27: Pedalbock
- 28: Gehäuse
- 29: Betätigungselement
- 30: Innenwand
- 31: Anschlag
- 32: Federelement
- 33: Betätigungselement
- 34: Fortsatz
- 35: Vorsprung
- 36: Gewindefortsatz
- 37: Befestigungselement
- 38: Bund
- 39: Anschlag
- 40: Betätigungselement
- 41: Fortsatz
- 42: Verbindungselement
- 43: Gewindestange
- 44: Befestigungselement
- 45: Rückstellfeder
- 46: Gehäuse
- 47: Betätigungselement
- 48: Betätigungselement
- 49: Fortsatz
- 50: Befestigungsring
- 51: Betätigungselement
- 52: Seitenwand
- 53: Bund
- 54: Lasche
- 55: Anschlag
- 56: Befestigungselement
- 57: Wegsensor
- 58: Permanentmagnet
- 59: Sensorelement
- 60: Element
- 61: Anschlagscheibe
- 62: Betätigungselement
- 63: Betätigungselement
- 64: Stufe
- 65: Federelement
- 66: Schraubendruckfeder
- 67: Schraubendruckfeder
- 68: Betätigungselement
- 69: Schaft
- 70: Anschlag
- 71: Anschlag
- 72: Stufe
- 73: Stufe
- 74: Stufe
- 75: Stufe
- 76: Stufe
- 77: Sicherungsring
- 78: Nut
- 79: Ende
- 80: Mutter
- 81: Betätigungselement
- 82: Fortsatz
- 83: Mutter
- 84: Ansatz
- 85: Rückstellfeder
- 86: Pedalendanschlag
- 87: Haltelement
- 88: Aufnahme
- 89: Kolbenstangenende
- 90: Kolbenstange
- 91: Dämpfungselement
- 92: Aufnahme
- 93: Betätigungselement
- 94: Schaft
- 95: Mutter

- a: Abstand

## Patentansprüche

1. Bremssystem vom Typ "Brake-by-wire" für ein Kraftfahrzeug, mit
a) einem mittels eines Bremspedals (1) einer Pedaleinheit betätigbaren Bremsdruckgeber (3, 4), der außerhalb der Betriebsart "Brake-by-wire" mit Radbremsen des Fahrzeuges verbindbar ist,
b) einer mittels einer elektronischen Steuereinheit (7) ansteuerbaren Druckquelle (3, 4, 5), die in der Betriebsart "Brake-by-wire" mit den Radbremsen des Fahrzeuges verbindbar ist,
c) Mitteln (6) zum Erfassen eines Fahrerverzögerungswunsches und
d) einem mit dem Bremspedal (1) zusammenwirkenden Pedalwegsimulator (2), der durch wenigstens ein Simulatorelement (15) gebildet ist und durch den in der Betriebsart "Brake-by-wire" eine auf das Bremspedal (1) wirkende Rückstellkraft unabhängig von der Ansteuerung der Druckquelle (3, 4, 5) simulierbar ist,
**dadurch gekennzeichnet, dass** eine Kraft-Weg-Charakteristik des Pedalwegsimulators (2) steuerbar vorgesehen ist.

2. Bremssystem nach Anspruch 1, **dadurch gekennzeichnet, dass** die Steuerung der Kraft-Weg-Charakteristik des Pedalwegsimulators (2) kraftabhängig vorgesehen ist, so dass ab einer vorbestimmten auf das Bremspedal (1) aufgebrachten Fußkraft eine Verlängerung des Pedalwegs ermöglicht wird und die hierbei aufzubringende Reaktionskraft einen definierten Grenzwert nicht überschreitet.

3. Bremssystem nach Anspruch 1 oder 2, **dadurch gekennzeichnet, dass** der Pedalwegsimulator (2) an einem fahrzeugfesten Bauteil (27) und dem Bremspedal (1) angelenkt ist.

4. Bremssystem nach Anspruch 1 oder 2, **dadurch gekennzeichnet, dass** der Pedalwegsimulator (2) zwischen einem fahrzeugfesten Bauteil (27) und einem koaxial zum Bremspedal (1) drehbaren Bauteil (26) angeordnet ist.

5. Bremssystem nach Anspruch 3 oder 4, **dadurch gekennzeichnet, dass** das fahrzeugfeste Bauteil (27) ein Teil der Pedaleinheit ist.

6. Bremssystem nach einem der vorangegangenen Ansprüche 2 bis 5, **dadurch gekennzeichnet, dass** zur Verlängerung des Pedalwegs ein Federelement (32,65) vorgesehen ist, welches ab einer vorbestimmten auf das Bremspedal (1) aufgebrachten Fußkraft komprimierbar ist und somit eine Verlängerung des Pedalwegs ermöglicht.

7. Bremssystem nach Anspruch 6, **dadurch gekennzeichnet, dass** das Federelement (32,65) als eine oder mehrere vorgespannte Federn vorgesehen ist.

8. Bremssystem nach Anspruch 7, **dadurch gekennzeichnet, dass** das vorgespannte Federelement (32,65) als Federpaket aus Tellerfedern oder als wenigstens eine Schraubendruckfeder (66,67) vorgesehen ist.

9. Bremssystem nach Anspruch 6, **dadurch gekennzeichnet, dass** das Federelement als Elastomer vorgesehen ist.

10. Bremssystem nach einem der Ansprüche 7 bis 9, **dadurch gekennzeichnet, dass** das Federelement (32,65) zwischen einem ersten, das Simulatorelement (15) tragenden Betätigungselement (29,47,63) und einem zweiten Betätigungselement (33,48,62,68) angeordnet ist.

11. Bremssystem nach Anspruch 10, **dadurch gekennzeichnet, dass** das Federelement (32,65) zwischen dem ersten Betätigungselement (47,63) und dem zweiten Betätigungselement (48,62,68) gefesselt angeordnet ist.

12. Bremssystem nach einem der Ansprüche 10 oder 11, **dadurch gekennzeichnet, dass** ein drittes Betätigungselement (40,81) vorgesehen ist, an welchem das Simulatorelement (15) angepresst wird und das mittelbar oder unmittelbar an dem Bremspedal (1) oder dem koaxial zum Bremspedal beweglichen Bauteil (26) befestigt ist.

13. Bremssystem nach einem der Ansprüche 7 bis 9, **dadurch gekennzeichnet, dass** das Federelement (65) zwischen dem koaxial zum Bremspedal (1) drehbaren Bauteil (26) und einem Betätigungselement (93) angeordnet ist und das Simulatorelement (15) mittels einer Aufnahme (92) an dem fahrzeugfesten Bauteil (27) befestigt ist.

14. Bremssystem nach Anspruch 12 oder 13, **dadurch gekennzeichnet, dass** ein Abstand (a) zwischen dem Simulatorelement (15) und dem Betätigungselement (81, 93) einstellbar vorgesehen ist.

15. Bremssystem nach Anspruch 10 oder 11, **dadurch gekennzeichnet, dass** das zweite Betätigungselement (48, 62) mittelbar an dem Bremspedal (1) oder dem koaxial zum Bremspedal (1) beweglichen Bauteil (26) befestigt ist und das Simulatorelement (15) an eine Seitenwand (52) eines Gehäuses (46) des Pedalwegsimulators (2) angepresst wird, wobei das Federelement (32) in Reihe zu einer Rückstellfeder (16) des Bremspedals (1) angeordnet ist.

16. Bremssystem nach einem der vorangegangenen Ansprüche, **dadurch gekennzeichnet, dass** der Pedalwegsimulator (2) einen Wegsensor (57) aufweist.

17. Bremssystem nach Anspruch 16, **dadurch gekennzeichnet, dass** der Wegsensor (57) einen Permanentmagneten (58) als Signalgeber und ein Sensorelement (59) umfasst.

18. Bremssystem nach einem der vorangegangenen Ansprüche, **dadurch gekennzeichnet, dass** eine Rückstellfeder (16,45,85) des Bremspedals (1) am Pedalwegsimulator (2) und/oder als separates Federelement vorgesehen ist.

19. Bremssystem nach einem der vorangegangenen Ansprüche, **dadurch gekennzeichnet, dass** auf dem Bremspedal (1) ein Halteelement (87) befestigt ist, welches eine trichterförmige Aufnahme (88) aufweist, die in Richtung einer Kolbenstange (90) des Bremskraftverstärkers (3) ausgerichtet ist.

## Claims

1. "Brake-by-wire" type brake system for a motor vehicle, having
a) a brake pressure sensor (3, 4) which can be activated by means of a brake pedal (1) of a pedal unit and can be connected to wheel brakes of the vehicle outside the "brake-by-wire" operating mode,
b) a pressure source (3, 4, 5) which can be actuated by means of an electronic control unit (7) and can be connected to the wheel brakes of the vehicle in the "brake-by-wire" operating mode,
c) means (6) for detecting a driver's deceleration request, and
d) a pedal travel simulator (2) which interacts with the brake pedal (1) and is formed by at least one simulator element (15), and by means of which a restoring force which acts on the brake pedal (1) independently of the actuation of the pressure source (3, 4, 5) can be simulated in the "brake-by-wire" operating mode,
**characterized in that** a force/travel characteristic of the pedal travel simulator (2) is provided in a controllable fashion.

2. Brake system according to Claim 1, **characterized in that** the control of the force/travel characteristic of the pedal travel simulator (2) is provided in a force-dependent fashion, with the result that, starting from a predetermined foot force applied to the brake pedal (1), prolongation of the pedal travel is made possible and the reaction force which occurs in the process does not exceed a defined limiting value.

3. Brake system according to Claim 1 or 2, **characterized in that** the pedal travel simulator (2) is coupled to a component (27), which is fixed to the vehicle, and to the brake pedal (1).

4. Brake system according to Claim 1 or 2, **characterized in that** the pedal travel simulator (2) is arranged between a component (27), which is fixed to the vehicle, and a component (26) which can rotate coaxially with respect to the brake pedal (1).

5. Brake system according to Claim 3 or 4, **characterized in that** the component (27) which is fixed to the vehicle is a part of the pedal unit.

6. Brake system according to one of the preceding Claims 2 to 5, **characterized in that**, in order to prolong the pedal travel, a spring element (32, 65) is provided which, starting from a predetermined foot force applied to the brake pedal (1), can be compressed and therefore permits prolongation of the pedal travel.

7. Brake system according to Claim 6, **characterized in that** the spring element (32, 65) is provided as one or more prestressed springs.

8. Brake system according to Claim 7, **characterized in that** the prestressed spring element (32, 65) is provided as a spring packet composed of disk springs or as at least one helical compression spring (66, 67).

9. Brake system according to Claim 6, **characterized in that** the spring element is provided as an elastomer.

10. Brake system according to one of Claims 7 to 9, **characterized in that** the spring element (32, 65) is arranged between a first activation element (29, 47, 63), which supports the simulator element (15), and a second activation element (33, 48, 62, 68).

11. Brake system according to Claim 10, **characterized in that** the spring element (32, 65) is arranged secured between the first activation element (47, 63) and the second activation element (48, 62, 68).

12. Brake system according to one of Claims 10 or 11, **characterized in that** a third activation element (40, 81) is provided onto which the simulator element (15) is pressed and which is attached indirectly or directly to the brake pedal (1) or to the component (26) which can move coaxially with respect to the brake pedal.

13. Brake system according to one of Claims 7 to 9, **characterized in that** the spring element (65) is arranged between the component (26), which can rotate coaxially with respect to the brake pedal (1), and an activation element (93), and the simulator element (15) is attached by means of a receptacle (92) to the component (27) which is fixed to the vehicle.

14. Brake system according to Claim 12 or 13, **characterized in that** a distance (a) is provided in an adjustable fashion between the simulator element (15) and the activation element (81, 93).

15. Brake system according to Claim 10 or 11, **characterized in that** the second activation element (48, 62) is attached indirectly to the brake pedal (1) or to the component (26) which can move coaxially with respect to the brake pedal (1), and the simulator element (15) is pressed onto a side wall (52) of a housing (46) of the pedal travel simulator (2), wherein the spring element (32) is arranged in series with a restoring spring (16) of the brake pedal (1).

16. Brake system according to one of the preceding claims, **characterized in that** the pedal travel simulator (2) has a travel sensor (57).

17. Brake system according to Claim 16, **characterized in that** the travel sensor (57) comprises a permanent magnet (58) as a signal generator and a sensor element (59).

18. Brake system according to one of the preceding claims, **characterized in that** a restoring spring (16, 45, 85) of the brake pedal (1) is provided on the pedal travel simulator (2) and/or as a separate spring element.

19. Brake system according to one of the preceding claims, **characterized in that** a securing element (87), which has a funnel-shaped receptacle (88) which is oriented in the direction of a piston rod (90) of the brake booster (3), is attached to the brake pedal (1).

## Revendications

1. Système de freinage du type "frein à commande électrique par câble" pour un véhicule automobile, comprenant
a) un générateur de pression de freinage (3, 4) pouvant être actionné au moyen d'une pédale de frein (1) d'une unité de pédale, qui peut être raccordé, en dehors du mode de fonctionnement de freinage à commande électrique par câble, aux freins de roues du véhicule,
b) une source de pression (3, 4, 5) pouvant être commandée au moyen d'une unité de commande électronique (7), qui, dans le mode de fonctionnement de freinage à commande électrique par câble, peut être raccordée aux freins de roues du véhicule,
c) des moyens (6) pour détecter un souhait de ralentissement du conducteur et
d) un simulateur de course de pédale (2) coopérant avec la pédale de frein (1), qui est formé par au moins un élément de simulateur (15) et par le biais duquel, dans le mode de fonctionnement de freinage à commande électrique par câble, une force de rappel agissant sur la pédale de frein (1) peut être simulée indépendamment de la commande de la source de pression (3, 4, 5),
**caractérisé en ce qu'**une caractéristique force-course du simulateur de course de pédale (2) est prévue de manière commandable.

2. Système de freinage selon la revendication 1, **caractérisé en ce que** la commande de la caractéristique force-course du simulateur de course de pédale (2) est prévue en fonction de la force, de sorte qu'à partir d'une force du pied prédéterminée appliquée sur la pédale de frein (1), un prolongement de la course de pédale soit possible et que la force de réaction à appliquer dans ce cas ne dépasse pas une valeur limite définie.

3. Système de freinage selon la revendication 1 ou 2, **caractérisé en ce que** le simulateur de course de pédale (2) est articulé à un composant (27) fixé au véhicule et à la pédale de frein (1).

4. Système de freinage selon la revendication 1 ou 2, **caractérisé en ce que** le simulateur de course de pédale (2) est disposé entre un composant (27) fixé au véhicule et un composant (26) pouvant tourner coaxialement par rapport à la pédale de frein (1).

5. Système de freinage selon la revendication 3 ou 4, **caractérisé en ce que** le composant (27) fixé au véhicule fait partie de l'unité de pédale.

6. Système de freinage selon l'une quelconque des revendications précédentes 2 à 5, **caractérisé en ce que** pour le prolongement de la course de pédale, il est prévu un élément de ressort (32, 65) qui peut être comprimé à partir d'une force du pied prédéterminée appliquée sur la pédale de frein (1) et permet ainsi un prolongement de la course de pédale.

7. Système de freinage selon la revendication 6, **caractérisé en ce que** l'élément de ressort (32, 65) est prévu sous la forme d'un ou de plusieurs ressorts précontraints.

8. Système de freinage selon la revendication 7, **caractérisé en ce que** l'élément de ressort précontraint (32, 65) est prévu sous la forme d'un paquet de ressorts constitué de ressorts Belleville ou sous forme d'au moins un ressort de compression à boudin (66, 67).

9. Système de freinage selon la revendication 6, **caractérisé en ce que** l'élément de ressort est prévu sous forme d'un élastomère.

10. Système de freinage selon l'une quelconque des revendications 7 à 9, **caractérisé en ce que** l'élément de ressort (32, 65) est disposé entre un premier élément d'actionnement (29, 47, 63) portant l'élément de simulateur (15) et un deuxième élément d'actionnement (33, 48, 62, 68).

11. Système de freinage selon la revendication 10, **caractérisé en ce que** l'élément de ressort (32, 65) est disposé de manière attachée entre le premier élément d'actionnement (47, 63) et le deuxième élément d'actionnement (48, 62, 68).

12. Système de freinage selon l'une quelconque des revendications 10 ou 11, **caractérisé en ce qu'**un troisième élément d'actionnement (40, 81) est prévu, contre lequel est pressé l'élément de simulateur (15), et qui est fixé de manière directe ou indirecte à la pédale de frein (1) ou au composant (26) déplaçable coaxialement par rapport à la pédale de frein.

13. Système de freinage selon l'une quelconque des revendications 7 à 9, **caractérisé en ce que** l'élément de ressort (65) est disposé entre le composant (26) pouvant tourner coaxialement par rapport à la pédale de frein (1) et un élément d'actionnement (93), et l'élément de simulateur (15) est fixé au moyen d'un logement (92) sur le composant (27) fixé au véhicule.

14. Système de freinage selon la revendication 12 ou 13, **caractérisé en ce qu'**une distance (a) entre l'élément de simulateur (15) et l'élément d'actionnement (81, 93) est prévue de manière ajustable.

15. Système de freinage selon la revendication 10 ou 11, **caractérisé en ce que** le deuxième élément d'actionnement (48, 62) est fixé de manière indirecte à la pédale de frein (1) ou au composant (26) déplaçable coaxialement par rapport à la pédale de frein (1), et l'élément de simulateur (15) est pressé contre une paroi latérale (52) d'un boîtier (46) du simulateur de course de pédale (2), l'élément de ressort (32) étant disposé en alignement avec un ressort de rappel (16) de la pédale de frein (1).

16. Système de freinage selon l'une quelconque des revendications précédentes, **caractérisé en ce que** le simulateur de course de pédale (2) présente un capteur de course (57).

17. Système de freinage selon la revendication 16, **caractérisé en ce que** le capteur de course (57) comprend un aimant permanent (58) en tant que générateur de signal et un élément de capteur (59).

18. Système de freinage selon l'une quelconque des revendications précédentes, **caractérisé en ce qu'**un ressort de rappel (16, 45, 85) de la pédale de frein (1) est prévu au niveau du simulateur de course de pédale (2) et/ou en tant qu'élément de ressort séparé.

19. Système de freinage selon l'une quelconque des revendications précédentes, **caractérisé en ce qu'**un élément de retenue (87) est fixé sur la pédale de frein (1), lequel présente un logement en forme d'entonnoir (88) qui est orienté dans la direction d'une tige de piston (90) de l'amplificateur de la force de freinage (3).
